# EUROPÄISCHE PATENTANMELDUNG

(11) **EP 1 285 867 A2**
(43) Veröffentlichungstag der Anmeldung: **26.02.2003**
(21) Anmeldenummer: 02018476.8
(22) Anmeldetag: 16.08.2002
(51) Int. Cl.: B65G 1/07

(54) **Transport- und Lagerbehälter mit lösbarem Hubmodul zum Heben des Behälterbodens**

(30) Priorität: 21.08.2001 DE 10142368
(71) Anmelder: Hessemer, Frank, 66271 Kleinblitterdorf (DE)
(72) Erfinder: Hessemer, Frank, 66271 Kleinblitterdorf (DE)
(74) Vertreter: Bernhardt, Winfrid, Dr.-Ing.

(57) **Zusammenfassung**

Die Erfindung betrifft ein Logistiksystem. Erfindungsgemäß sind Transport- und Lagerbehälter mit einem unter Änderung der Behältertiefe vertikal bewegbaren Behälterboden (5) und einem von dem übrigen Behälter (1,2) lösbaren Hubmodul (4) für die Bewegung des Behälterbodens (5) vorgesehen. Vorzugsweise ist in den übrigen Behälter (1,2) eine Palette (2) integriert, wobei der Hubmodul (4) in die Palette (2) einschiebbar oder der übrige Behälter auf den Hubmodul aufsetzbar oder der Hubmodul auf die Palette aufsetzbar ist. Zweckmäßig lässt sich der übrige Behälter (1,2) zusammenlegen.

## Beschreibung

Die Erfindung betrifft ein neues, Transport- und Lagerbehälter verwendendes Logistiksystem.

Aus der DE 199 48 940 A1 ist ein Transport- und Lagerbehälter zur Angebotspräsentation von Obst und Gemüse bekannt, welcher einen unter Änderung der Behältertiefe vertikal bewegbaren Behälterboden und Einrichtungen zur Höhenpositionierung des Behälterbodens abhängig von der im Behälter befindlichen Warenmenge aufweist. Insbesondere ist die Positioniereinrichtung dazu vorgesehen, den Behälterboden abhängig von der Abnahme der im Behälter befindlichen Warenmenge unter Beibehaltung der Präsentationshöhe der im Behälter oben liegenden Ware anzuheben. Der Kunde kann somit bequem zugreifen. Vom Kunden geprüfte und zurückgelegte Ware kann nicht tief in den Behälter hineinfallen und beschädigt werden. Das Obst und Gemüse braucht zur Angebotspräsentation nicht in flachere Behälter umgeladen zu werden.

Der Erfindung liegt die Aufgabe zugrunde, ausgehend von einem solchen Behälter mit einem unter Änderung der Behältertiefe vertikal bewegbaren Behälterboden ein neues, effizientes Logistiksystem zu schaffen.

Das diese Aufgabe lösende Logistiksystem nach der Erfindung ist gekennzeichnet durch Transport- und Lagerbehälter, die einen von dem übrigen Behälter bestimmungsgemäß lösbaren Hubmodul für die Bewegung des Behälterbodens aufweisen.

Vorteilhaft kann gemäß dieser Erfindungslösung der übrige Behälter getrennt von dem Hubmodul verwendet werden, um Ware ohne Umladung vom Erzeuger bis zum Endverbraucher zu transportieren. Erst an der Übergabestelle zum Endverbraucher müssen mit dem übrigen Behälter kombinierbare Hubmodule verfügbar sein. Hubmodule brauchen nicht mittransportiert zu werden.

Es versteht sich, dass der übrige Behälter und der Hubmodul Normmaße aufweisen können, wobei es denkbar ist, einen Hubmodul zur möglichst weitgehenden Auslastung kompatibel mit mehreren Normbehältern auszubilden.

Hier bietet sich ein Poolsystem an, das maximale Verfügbarkeit bei geringstmöglicher Anzahl der Hubmodule und Behälter sichert. Da nur an der Übergabestelle zum Endverbraucher Hubmodule benötigt werden, kann die Zahl der in dem Logistiksystem erforderlichen Hubmodule deutlich geringer als die Zahl der mit vergleichsweise geringem Aufwand herstellbaren übrigen Transportbehälter sein.

Zweckmäßig ist in den übrigen Transportbehälter eine Palette integriert, die eine Handhabung der Ladehilfsmittel wie Gabelstapler ermöglicht.

Der Hubmodul kann in die Palette, z.B. seitlich, einschiebbar sein. Ferner ist es denkbar, den übrigen Behälter auf den Hubmodul aufzusetzen. Umgekehrt ist es denkbar, den Hubmodul auf die Palette aufzusetzen, so dass er zwischen der Palette und dem vertikal beweglichen Behälterboden angeordnet ist.

In einer besonders bevorzugten Ausführungsform der Erfindung ist der Behälter zu einem kompakten, stapelbaren Paket zusammenlegbar. Leere Transportbehälter können so sehr effizient transportiert werden.

Auch die gefüllten Behälter können stapelbar sein.

Zweckmäßig handelt es sich bei dem Hubmodul um eine mit Rädern versehene, fahrbare Einheit, die sich beispielsweise seitlich unter die Palette schieben lässt.

In weiterer Ausgestaltung der Erfindung ist eine den Füllungsspiegel im Transport- und Lagerbehälter erfassende Sensoreinrichtung vorgesehen. Dabei kann es sich z.B. um eine Lichtschranke handeln. Denkbar sind jedoch auch kapazitive und induktive Sensoreinrichtungen. Schließlich ließe sich das Gewicht der Warenfüllmenge als Führungsgröße für die Nachstellung des Behälterbodens ermitteln.

Der Hubmodul ist zweckmäßig mit einem netz- oder/und batteriebetriebenen Elektroantrieb versehen, wobei zusätzlich eine Ladeeinrichtung zur Ladung der Batterie in den Modul integriert sein kann, die es in bequemer Weise ermöglicht, eine Aufladung der Batterie ohne Entnahme aus dem Modul durchzuführen. Der ergänzende Batteriebetrieb ist vorteilhaft, weil in vielen Fällen keine Stromquelle in der Nähe des Einsatzorts des Hubmoduls zur Verfügung steht.

Zwischen dem Hubmodul und dem übrigen Behälter können beim Kombinieren von Hubmodul und Behälter automatisch elektrische Kontakte herstellbar sein, insbesondere zwischen der Sensoreinrichtung und einer in dem Hubmodul vorgesehenen Steuereinrichtung zum Ein- und Ausschalten des Elektroantriebs abhängig von der Füllhöhe. Zweckmäßig sind am Hubmodul und dem übrigen Behälter Führungsanschläge für die genaue Ausrichtung des Hubmoduls zu dem übrigen Behälter gebildet, durch welche die elektrische Kontaktgabe gesichert ist.

In der bevorzugten Ausführungsform der Erfindung weist der Hubmodul einen Basisteil, ein am beweglichen Boden des übrigen Behälters angreifendes Hubträgerteil und zwischen dem Basisteil und dem Hubträgerteil angeordnete, unter vertikaler Bewegung des Hubträgerteils gegeneinander verschwenkbare Scherenschenkel auf. Der Hubträgerteil einer solchen Hubeinrichtung bewegt sich exakt vertikal, so dass der auf dem Hubträgerteil aufliegende Boden des Behälters an der Behälterwand keiner besonderen Führungen bedarf. Vorzugsweise ist ein solcher Hubmodul mit einem Spindelantrieb ausgerüstet, wobei ein durch die Spindel bewegter Gewindekörper zweckmäßig auf miteinander gelenkig verbundene Spreizhebel einwirkt, deren Enden an dem Basisteil bzw. dem Hubträgerteil angreifen.

In weiterer Ausgestaltung der Erfindung lassen sich die Behälter und Hubmodule mit Sendereinrichtungen zur Ortung dieser Teile ausrüsten.

Als bevorzugtes Anwendungsgebiet des neuen Logistiksystems kommt vor allem der Transport und die Angebotspräsentation von Obst und Gemüse in Betracht. Denkbar sind jedoch auch Anwendungen des Systems zum Transport und zur Lagerung von Teilen vor Ort, die an einem Montageband zu verarbeiten sind.

Die Erfindung soll nun anhand von Ausführungsbeispielen und der beiliegenden, sich auf diese Ausführungsbeispiele beziehenden Zeichnungen näher erläutert werden. Es zeigen:
Fig. 1 ein erstes Ausführungsbeispiel für einen Transport- und Lagerbehälter, der in dem Logistiksystem nach der Erfindung verwendbar ist, in einer Seitenansicht,
Fig. 2 den Behälter von Fig. 1 in einer zu der Seitenansicht von Fig. 1 senkrechten Seitenansicht,
Fig. 3 den Behälter von Fig. 1 im angehobenen Zustand des Behälterbodens,
Fig. 4 den Behälter von Fig. 1 im teilweise zusammengelegten Zustand,
Fig. 5 ein zweites Ausführungsbeispiel für einen Transport- und Lagerbehälter, der in dem Logistiksystem nach der Erfindung verwendbar ist, und
Fig. 6 und 7 weitere Ausführungsbeispiele für in dem Logistiksystem nach der Erfindung verwendbare Hubmodule.

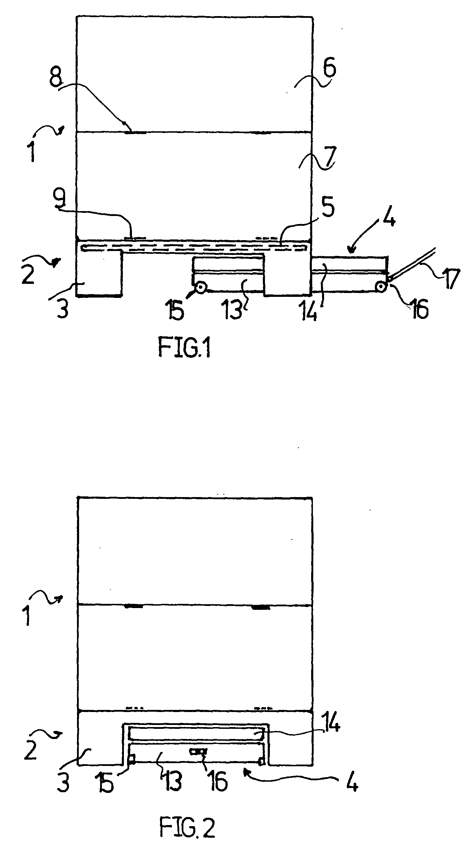

Der in den Fig. 1 bis 4 gezeigte Behälter weist einen Gefäßteil 1 auf, der ein Füllvolumen bildet und mit einem Palettenteil 2 verbunden ist. In den Palettenteil 2, der mit Palettenfüßen 3 versehen ist, lässt sich seitlich ein Hubmodul 4 einschieben.

Der Behälterteil 1 weist einen durch Strichlinien dargestellten Behälterboden 5 auf, welcher an seinen Rändern durch den Palettenteil 2 abgestützt ist und sich von dem Palettenteil abheben lässt.

Die vier Behälterwände sind jeweils in übereinander angeordnete Abschnitte 6 und 7 unterteilt, die durch Scharniere 8 miteinander verbunden und zum Zusammenlegen des Behälters gegeneinander verschwenkbar sind. Die Scharniere 8 sind auf der Behälteraußenseite angebracht. Jeweils auf der Behälterinnenseite angeordnete Scharniere 10 verbinden die Behälterwandabschnitte 7 mit dem Palettenteil 2.

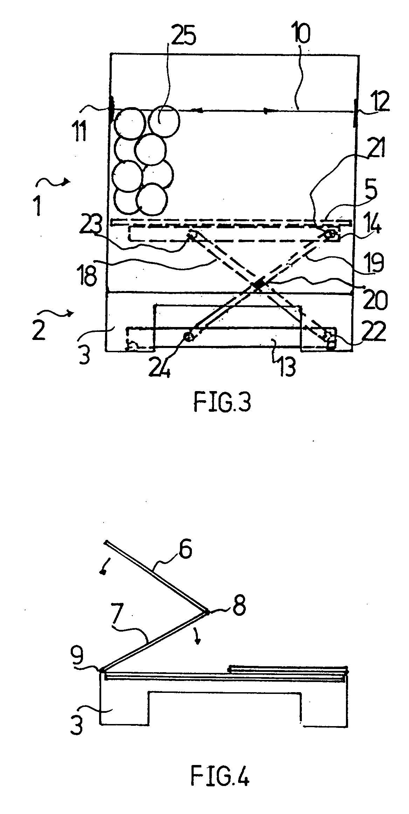

Der Palettenteil 2 ist ferner mit einer in Fig. 3 sichtbaren Einrichtung zur Erzeugung einer Lichtschranke 10 mit einer Senderempfängereinheit 11 und einem Reflektor 12 versehen.

Der Hubmodul 4 ist in dem gezeigten Ausführungsbeispiel mit einem rahmenartigen Basisteil 13 und einem über dem Basisteil angeordneten, in ähnlicher Weise rahmenartig ausgebildeten Hubträgerteil 14 versehen. Über Räder 15 am Basisteil 13 lässt sich der Modul fahren, wozu bei 16 an dem Modul eine Zug-/Schubstange 17 eingehängt werden kann.

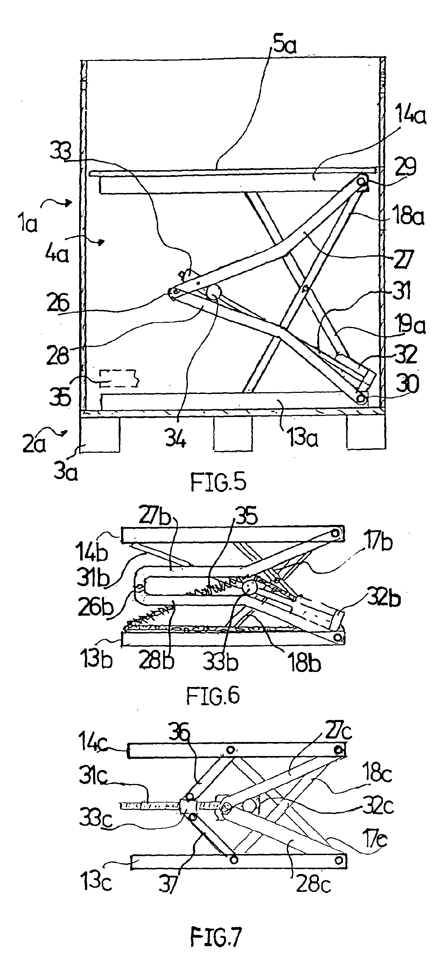

Wie aus Fig. 3 hervorgeht, sind der Basisteil 13 und der Hubträgerteil 14 über Scherenschenkel 18 und 19 miteinander verbunden, wobei auf gegenüberliegenden Randseiten des Moduls 4 zwei solcher Scherenschenkelpaare 18,19 angeordnet sind. Jeder der bei 20 gelenkig miteinander verbundenen Scherenschenkel 18 ist mit einem Ende an dem Basisteil 13 und mit dem anderen Ende an den Hubträgerteil 14 angelenkt, wobei die Bezugszeichen 21 und 22 auf Anlenkungen mit fester Drehachse und die Bezugszeichen 23 und 24 auf Anlenkungen mit beweglicher Drehachse hinweisen. Letztere Anlenkungen sind durch Rollen gebildet, die auf einer Führungsbahn an dem Basisteil 13 bzw. dem Hubträgerteil 14 laufen. Einrichtungen zum vertikalen Bewegen des Hubträgerteils 14 unter gegenseitiger Verschwenkung der Scherenschenkel 18 und 19 sind in Fig. 3 nicht gezeigt. Solche Antriebe werden weiter unten anhand der Fig. 5 bis 7 erläutert.

Der anhand der Fig. 1 bis 4 beschriebene Behälter kann z.B. zum Transport und zur Lagerung von Obst verwendet werden, wobei vom Erntefeld bis zur Präsentation in einer Verkaufsstelle das Obst ohne Umladung in ein und demselben Behälter verbleiben kann. Bis zur Verkaufspräsentation wird der Behälter ohne den Hubmodul 4 benutzt. Erst in der Verkaufsstelle wird der Modul 4 hinzugefügt, um den Behälterboden 5 so nachzuführen, dass der Füllungsspiegel stets etwa in Höhe der Lichtschranke 10 liegt. In dieser Position lässt sich das Obst bequem dem Behälter entnehmen. Wird beim Nachführen die Lichtschranke durch die aufsteigende Ware unterbrochen, so wird der Antrieb des von unten am Boden 5 angreifenden Hubträgerteils 14 stillgesetzt. Umgekehrt erfolgt eine Einschaltung des Antriebs, wenn die Sendeempfangseinrichtung 11 vom Reflektor 12 zurückgeworfenes Licht empfängt.

Durch die Scherenschenkel 18,19 ist für eine exakte Vertikalführung des Hubträgerteils 14 und damit auch des Behälterbodens 5 gesorgt, so dass für den Boden keine besonderen Randführungseinrichtungen erforderlich sind. Je nach Füllgut könnten flexible, den Rand des Bodens 5 umsäumende Dichtlippen zweckmäßig sein.

Der schließlich entleerte Behälter lässt sich gemäß Fig. 4 zusammenlegen, wobei jeweils die Behälterwandabschnitte 7 nach innen und die Behälterwandabschnitte 6 nach außen geklappt werden. Die unteren Ränder der einander gegenüberliegenden Seitenwandpaare sind in der Höhe um zwei Wandstärken zueinander versetzt angeordnet, so dass sich der Behälter problemlos unter Bildung einer ebenen Oberfläche zusammenlegen lässt und die zusammengelegten Behälter gestapelt werden können. Auch die gefüllten Behälter sind stapeibar.

Verriegelungseinrichtungen zur gegenseitigen Befestigung der aufgeklappten Wände sind in den Figuren nicht gezeigt.

Es wird nun Bezug auf Fig. 5 genommen, wo ein weiteres Ausführungsbeispiel für einen Behälter mit einem Gefäßteil 1a, einem Palettenteil 2a und einem Hubmodul 4a gezeigt ist.

Der Hubmodul 4a, der in dem betreffenden Ausführungsbeispiel zwischen dem Boden des Behälterteils 1a und den Palettenteil 2a auf den Palettenteil aufsetzbar ist, weist wie der vorangehend beschriebene Hubmodul 4 einen Basisteil 13a, einen Hubträgerteil 14a und Basis- und Hubträgerteil verbindende Paare von Scherenschenkeln 18a und 19a auf.

Ein Hubantrieb umfasst bei 26 gelenkig miteinander verbundene, gekröpfte Spreizhebel 27 und 28, von denen der Spreizhebel 27 bei 29 an den Hubträgerteil 14a und der Spreizhebel 28 bei 30 an den Basisteil 13a angelenkt ist. Die Anlenkachse fällt jeweils mit der Anlenkachse des Scherenschenkels 18 bzw. 19 zusammen.

Die Spreizhebel 27 und 28 sind jeweils als Doppelhebel mit im Abstand zueinander angeordneten Hebelteilen ausgebildet. In Draufsicht gesehen ist zwischen den Hebelteilen eine Spindel 31 angeordnet, die durch einen Antriebsmotor 32 drehbar ist und in ein Gewinde eines Gewindekörpers 33 eingreift. Der an den Spreizhebel 27 angelenkte Gewindekörper 33 weist Rollen 34 auf, die auf den zueinander im Abstand angeordneten Hebelteilen des Spreizhebels 27 abrollen.

Zum Anheben des Hubträgerteils 14a zieht die durch den Motor 32 angetriebene Spindel 31 den Gewindekörper 33 in Richtung Antriebsmotor 32, wodurch die gekröpften Spreizhebel 27 und 28 unter Anhebung des Hubträgerteils aufgespreizt werden. Bei Drehung des Motors 32 in umgekehrter Richtung kommt es dementsprechend zur Absenkung des Hubträgerteils 14a. Im weitestgehend abgesenkten Zustand nimmt der Hubträgerteil 14a die bei 35 durch Strichlinien angedeutete Position ein. Bei dem gezeigten Ausführungsbeispiel beträgt die Bauhöhe des Hubmoduls 4a in diesem Zustand nur 100 mm.

In dem Hubmodul von Fig. 6 dreht wie in dem Modul von Fig. 5 ein Antriebsmotor 32b eine Spindel 31 b, wobei durch die Drehung der Spindel ein Gewindekörper 33b entlang der Spindel bewegt wird. In dem betreffenden Ausführungsbeispiel ist der Gewindekörper 33b mit einem zweimal umgelenkten Ketten- oder Seilzug 35 verbunden, durch welchen Spreizhebel 27b und 28b unter Abhebung eines Hubträgerteils 14b von einem Basisteil 13b gespreizt werden.

Bei dem Hubmodul von Fig. 7 sind zwei weitere Spreizhebel 36 und 37 vorgesehen, die an einen durch eine Spindel 31c bewegten Gewindekörper 33c an einem Ende angelenkt und am anderen Ende gelenkig mit einem Basisteil 13c bzw. Hubträgerteil 14c verbunden sind. Bei diesem Ausführungsbeispiel erstreckt sich die Spindel 31c in jeder Stellung des Hubträgerteils 14c horizontal.

## Patentansprüche

1. Logistiksystem,
**gekennzeichnet durch** Transport- und Lagerbehälter mit einem unter Änderung der Behältertiefe vertikal bewegbaren Behälterboden (5) und einem von dem übrigen Behälter (1,2) lösbaren Hubmodul (4) für die Bewegung des Behälterbodens (5).

2. Logistiksystem nach Anspruch 1,
**dadurch gekennzeichnet,**
**dass** in den übrigen Behälter (1,2) eine Palette (2) integriert ist.

3. Logistiksystem nach Anspruch 1 oder 2,
**dadurch gekennzeichnet,**
**dass** der Hubmodul (4) in die Palette (2) einschiebbar oder der übrige Behälter auf den Hubmodul oder der Hubmodul auf die Palette aufsetzbar ist.

4. Logistiksystem nach einem der Ansprüche 1 bis 3,
**dadurch gekennzeichnet,**
**dass** der übrige Behälter (1,2) zusammenlegbar ist.

5. Logistiksystem nach einem der Ansprüche 1 bis 4,
**dadurch gekennzeichnet,**
**dass** eine den Füllungsspiegel im Transport- und Lagerbehälter erfassende Sensoreinrichtung (11,12) vorgesehen ist.

6. Logistiksystem nach einem der Ansprüche 1 bis 5,
**dadurch gekennzeichnet,**
**dass** bei Verbindung des Hubmoduls (4) mit dem übrigen Behälter (1,2) automatisch elektrische Kontakte zwischen dem Hubmodul (4) und dem übrigen Behälter (1,2) herstellbar sind.

7. Logistiksystem nach einem der Ansprüche 1 bis 6,
**dadurch gekennzeichnet,**
**dass** der Hubmodul (4) einen netz- oder batteriebetriebenen Elektroantrieb (32) umfasst.

8. Logistiksystem nach einem der Ansprüche 1 bis 7,
**dadurch gekennzeichnet,**
**dass** der Hubmodul (4) eine fahrbare Einheit ist.

9. Logistiksystem nach einem der Ansprüche 1 bis 8,
**dadurch gekennzeichnet,**
**dass** der Hubmodul und der übrige Behälter Führungsanschläge für die Ausrichtung des Hubmoduls in seiner Arbeitsstellung zu dem übrigen Behälter (1,2) aufweisen.

10. Logistiksystem nach einem der Ansprüche 1 bis 9,
**dadurch gekennzeichnet,**
**dass** der Hubmodul (4) einen Basisteil (13), einen am vertikal beweglichen Boden (5) des übrigen Behälters (1,2) angreifenden Hubträgerteil (14) und zwischen dem Basisteil (13) und dem Hubträgerteil (14) angeordnete, unter vertikaler Bewegung des Hubträgerteils (14) gegeneinander verschwenkbare Scherenschenkel (18,19) umfasst.

11. Logistiksystem nach einem der Ansprüche 1 bis 10,
**dadurch gekennzeichnet,**
**dass** der Hubmodul (4) einen Spindelantrieb (31-33) umfasst.
